# EUROPEAN PATENT SPECIFICATION

(11) **EP 3 668 058 B1**
(45) Date of publication and mention of the grant of the patent: **03.11.2021**
(21) Application number: 18865889.2
(22) Date of filing: 27.07.2018
(51) Int. Cl.: H04L 29/06, H04W 12/08, H04L 29/08, H04L 29/12

(54) **CONTENT DISTRIBUTION METHOD AND SYSTEM**
VERFAHREN UND SYSTEM ZUR INHALTSVERTEILUNG
PROCÉDÉ ET SYSTÈME DE DISTRIBUTION DE CONTENU

(30) Priority: 13.10.2017 CN 201710955172
(43) Date of publication of application: 17.06.2020
(73) Proprietor: Huawei Technologies Co., Ltd., Longgang District Shenzhen, Guangdong 518129 (CN)
(72) Inventor: WU, Dongjun, Shenzhen Guangdong 518129 (CN); HUANG, Shibi, Shenzhen Guangdong 518129 (CN); LIN, Dong, Shenzhen Guangdong 518129 (CN)
(74) Representative: Epping - Hermann - Fischer
(86) International application number: PCT/CN2018/097670
(87) International publication number: WO 2019/071995

(56) References cited:
- EP-A1- 3 008 862
- CN-A- 102 891 804
- CN-A- 105 208 059
- CN-A- 105 432 045
- QUALCOMM INCORPORATED: "UE assisted local caching", 3GPP DRAFT; R3-171245 UE ASSISTED LOCAL CACHING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Spokane, USA; 20170403 - 20170407 3 April 2017 (2017-04-03), XP051245955, Retrieved from the Internet: URL:http://www.3gpp.org/ftp/Meetings_3GPP_ SYNC/RAN3/Docs/ [retrieved on 2017-04-03]

## Description

This application claims priority to Chinese Patent Application No. 201710955172.8, filed with the Chinese Patent Office on October 13, 2017 and entitled "CONTENT DELIVERY METHOD, DEVICE, AND SYSTEM'.

### TECHNICAL FIELD

This application relates to the field of communications technologies, and in particular, to a content delivery method, a device, and a system.

### BACKGROUND

With rapid development of the Internet, people have a growing requirement for a network, and expect increasingly quick response from a visited website. However, in actual application, content consumed by people is approximately the same within a specific range. When content of a same website is repeatedly consumed by people, bandwidth pressure is brought to an entire network, severely affecting a response speed of the website visited by people. To resolve this problem, a content delivery network (content delivery network, CDN) distributes content of a website to a network "edge" closest to a user (for example, a service node closest to the user), so that the user obtains desired content nearby, increasing a response speed of the website visited by the user.

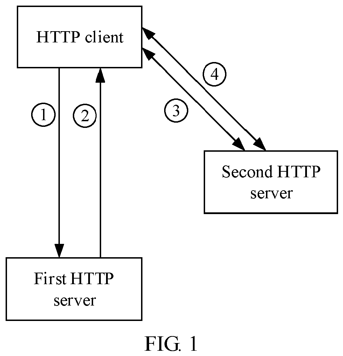

Generally, a skilled person dynamically guides a user to a network "edge" by using Hypertext Transfer Protocol (hypertext transfer protocol, Http) redirection, so that the user obtains desired content nearby. FIG. 1 is a block diagram of an Http redirection principle. Http redirection includes the following several steps: ① An Http client (client) accesses a first Http server. ② The first Http server returns a redirection instruction to the Http client, where the redirection instruction points to a second Http server that stores content to be accessed by the Http client (the Http server is a server closest to the Http client). ③The Http client establishes a connection to the second Http server, and accesses the second Http server. ④ The second Http server returns the content required by the Http client. It should be noted that FIG. 1 is merely an example block diagram. In actual application, it is possible that the Http client is directed to the second Http server by using redirection instructions of a plurality of Http servers such as the first Http server, a third Http server, and a fourth Http server. For example, the first Http server returns, to the Http client, a redirection instruction that points to the third Http server, and the Http client accesses the third Http server according to the instruction; the third Http server returns, to the Http client, a redirection instruction that points to the fourth Http server, and the Http client accesses the fourth Http server according to the instruction; and the fourth Http server returns, to the Http client, a redirection instruction that points to the second Http server, and the Http client accesses the second Http server according to the instruction.

In an Http redirection process, because a phenomenon such as Internet service provider (internet service provider, ISP) domain name system (domain name system, DNS) hijacking frequently occurs, the Http client tends to specify a DNS on its own and access a server (for example, the first Http server) with a redirection function based on the DNS specified on its own, resulting in a phenomenon such as traffic chaos.

Document "UE assisted local caching, 3^{rd} generation partnership project (3GPP)", Qualcomm Incorporated, 3GPP ORAFT; R3-171245 discloses a mechanism of user equipment assisted local cache.

Document EP 3 008 862 A1 discloses a method for dynamically providing a CDN service at a first node through a mobile network.

### SUMMARY

This application provides a content delivery method, and a system, to resolve an existing problem of traffic chaos in Http redirection. The invention is set out in the appended set of claims.

To achieve the foregoing objective, the following technical solutions are used in this application: A first aspect of this application provides a content delivery method, including:
receiving, by a first access gateway, a configuration command, and configuring a correspondence between an identifier and a traffic diversion policy according to the configuration command; receiving, by the first access gateway, a first access request that carries a first identifier; when a traffic diversion policy corresponding to the first identifier exists in the configured correspondence, diverting, by the first access gateway, the first access request to a first server, receiving content returned by the first server, and sending the content to a terminal device, wherein the method further includes
configuring, by a CDN server, a correspondence between the identifier and the accelerated content; sending, by the terminal device, a content request to the CDN server, where the content request carries content identification information for identifying the content; querying, by the CDN server, the correspondence between the identifier and the accelerated content, to determine the first identifier corresponding to the content, and sending the first identifier to the terminal device; and receiving, by the terminal device, the first identifier, and sending the access request that carries the first identifier.

In this way, the CDN server can provide storage and delivery functions of an identifier, so that the terminal device obtains the identifier from the CDN server, and sends an access request that carries the identifier.

In the technical solution provided in this application, the access gateway configures the correspondence between an identifier and a traffic diversion policy. When the terminal device requests to access content corresponding to an identifier, the access request is intercepted by the first access gateway, and is directly diverted to the first server. The first server provides a content service for the terminal device, and the terminal device does not need to specify a DNS on its own, avoiding a traffic chaos problem. In addition, in the technical solution provided in this application, redirection instructions of a plurality of other network devices are not needed to divert the access request to a server, that is, there is no bypass, avoiding a problem of a relatively long scheduling delay. Moreover, in the technical solution provided in this application, the access gateway directly diverts the access request to the server with no need to point to a specific server with reference to positioning information of the terminal device. This avoids a prior-art problem that an Http server points to an inaccurate server based on positioning information of a terminal device due to low accuracy of positioning the terminal device.

With reference to the first aspect, in a first possible implementation of the first aspect, the traffic diversion policy includes network address information, where the network address information is used to identify a server that stores the content to be accessed by the terminal device, and the diverting, by the first access gateway, the first access request to a first server includes: obtaining, by the first access gateway, first network address information in the traffic diversion policy corresponding to the first identifier; and diverting the first access request to the first server based on the first network address information, where the first network address information is used to identify the first server.

The network address information may be an Internet Protocol (internet protocol, IP) address, or may be a Media Access Control (media access control, MAC) address. This is not limited.

In this way, the first access gateway may divert the access request to a specified server based on a network address of the server.

With reference to the first possible implementation of the first aspect, in a second possible implementation of the first aspect, the network address information corresponding to the identifier in the correspondence may be dynamically updated based on an actual status of a current network, to divert the access request to an appropriate server. Specifically, the method further includes:
updating, by the first access gateway, the first network address information to second network address information based on position information of the terminal device, position information of the server that stores the content to be accessed by the terminal device, and a current network environment; or
receiving, by the first access gateway, an update command, and updating the first network address information to second network address information according to the update command, where the server identified by the first network address information is different from a server identified by the second network address information.

In this way, the network address information corresponding to the identifier may be dynamically updated based on an actual case such as the position information of the terminal device, the position information of the server, and the current network environment.

With reference to the first aspect or any possible implementation of the first aspect, in a third possible implementation of the first aspect, the method further includes:
receiving, by the first access gateway, a second access request that carries a second identifier; and when a traffic diversion policy corresponding to the second identifier exists in the correspondence, configured by the first access gateway, between an identifier and a traffic diversion policy, diverting, by the first access gateway, the second access request to a second server, where the second server is different from the first server.

In this way, a same access gateway can divert access requests that carry different identifiers to different servers, and the different servers provide a content service for the terminal device, so as to implement load sharing.

With reference to the first aspect or any possible implementation of the first aspect, in a fourth possible implementation of the first aspect, the receiving, by the first access gateway, a first access request includes: receiving, by the first access gateway, the first access request sent by the terminal device through a first traffic path; and the sending, by the first access gateway, the content to the terminal device includes: sending, by the first access gateway, the content to the terminal device through a second traffic path, where
there is at least one relay device on the first traffic path, and the second traffic path and the first traffic path are the same or different.

In this way, the content may be returned to the terminal device according to an original path, or may be returned to the terminal device according to another path (for example, the another path may be dynamically selected based on cases such as a current network environment and load). This improves flexibility of data transmission.

With reference to the first aspect or any possible implementation of the first aspect, in a fifth possible implementation of the first aspect, the identifier includes but is not limited to an identifier in any one of the following forms: an IP address, a character string, a digit, and a letter. In this way, the identifier may be in an IP address form, to implement compatibility with an existing IP protocol; or the identifier may be in another form, to improve usage flexibility.

With reference to the first aspect or any possible implementation of the first aspect, in a sixth possible implementation of the first aspect, one piece of accelerated content corresponds to one or more different identifiers; and identifiers corresponding to different accelerated content are the same or different.

With reference to the first aspect or any possible implementation of the first aspect, in a seventh possible implementation of the first aspect, the method further includes:
receiving, by a second access gateway, an access request that carries the first identifier; and when the traffic diversion policy corresponding to the first identifier exists in a correspondence, configured by the second access gateway, between an identifier and a traffic diversion policy, diverting, by the second access gateway, the access request to a third server, where the third server is different from the first server.

In this way, an access request of a same terminal device may be diverted to different servers by different access gateways, so that the different servers provide a content service for the same terminal device, so as to implement load sharing.

A second aspect of this application provides a content delivery system comprising a CDN server, a terminal device and an access gateway, the access gateway includes:
a receiving unit, configured to receive a configuration command;
a configuration unit, configured to configure a correspondence between an identifier and a traffic diversion policy according to the configuration command, where the identifier corresponds to accelerated content, where
the receiving unit is further configured to receive a first access request, the first access request carries a first identifier, and the first access request is used to request content to be accessed by a terminal device;
a diversion unit, configured to: when a traffic diversion policy corresponding to the first identifier exists in the correspondence, divert the first access request to a first server, where
the receiving unit is further configured to receive content returned by the first server; and
   a sending unit, configured to send the content to the terminal device, wherein
   a CDN server is configured to configure a correspondence between the identifier and the accelerated content;
   the terminal device is configured to send a content request to the CDN server, wherein the content request carries content identification information for identifying the content;
   the CDN server is configured to query the correspondence between the identifier and the accelerated content, to determine the first identifier corresponding to the content, and is configured to send the first identifier to the terminal device; and
the terminal device is configured to receive the first identifier, and configured to send an access request that carries the first identifier.

For specific implementations of the access gateway, refer to behavior and a function of the first access gateway in the content delivery method according to the foregoing aspect or the possible implementations of the foregoing aspect. Details are not described herein again. Therefore, the access gateway according to this aspect can achieve beneficial effects the same as those of the foregoing aspect.

According to another aspect, an embodiment of the present invention provides a content delivery apparatus. The content delivery apparatus is in a form of a chip product, and the content delivery apparatus can implement a function performed by the first access gateway in the foregoing method embodiment. The function may be implemented by hardware, or may be implemented by executing corresponding software by hardware. The hardware or the software includes one or more modules corresponding to the function.

In a possible design, a structure of the content delivery apparatus includes a processor and a communications interface. The processor is configured to support the access gateway in implementing corresponding functions in the foregoing method. The communications interface is configured to support communication between the access gateway and another network element. The content delivery apparatus may further include a memory, and the memory is configured to be coupled to the processor and store a program instruction and data that are necessary for the content delivery apparatus.

According to another aspect, an embodiment of the present invention provides a computer storage medium, configured to store a computer software instruction used by the access gateway, and the computer software instruction includes a program configured to perform the content delivery method.

According to another aspect, an embodiment of the present invention provides a computer program product. The program product stores a computer software instruction used by the access gateway, and the computer software instruction includes a program configured to perform the content delivery method.

According to still another aspect, an embodiment of the present invention provides a content delivery system, including the access gateway according to the foregoing second aspect, a CDN server, a terminal device, and a server.

### BRIEF DESCRIPTION OF DRAWINGS

FIG. 1 is a block diagram of an Http redirection principle;
FIG. 2 is a simplified schematic diagram of a system architecture according to this application;
FIG. 3 is a schematic composition diagram of an access gateway according to this application;
FIG. 4 is a flowchart of a content delivery method according to this application;
FIG. 5 is a flowchart of another content delivery method according to this application;
FIG. 6A and FIG 6B are a flowchart of still another content delivery method according to this application;
FIG. 7 is a schematic composition diagram of an access gateway according to this application; and
FIG. 8 is a schematic composition diagram of a content delivery apparatus according to this application.

### DESCRIPTION OF EMBODIMENTS

The following describes implementations of this application in detail with reference to accompanying drawings.

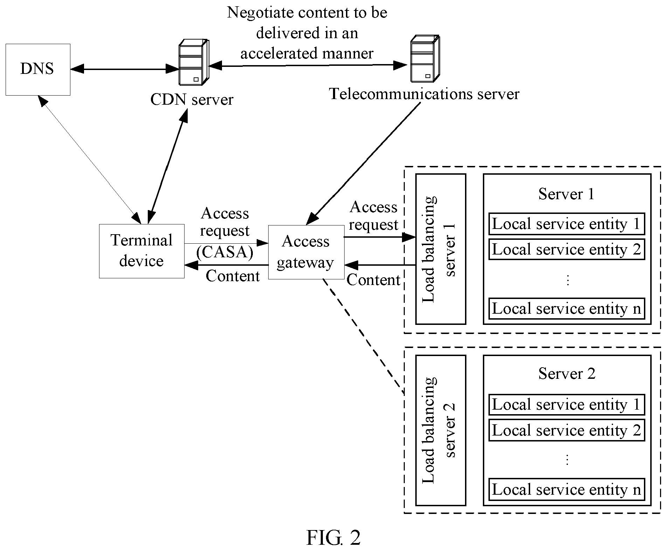

A content delivery method in this embodiment of this application may be applied to a CDN network shown in FIG. 2. As shown in FIG. 2, the CDN network may include devices such as a terminal device, an access gateway, a server, a domain name system (domain name system, DNS), a CDN server, and a telecommunications server.

The terminal device in FIG. 2 may be configured to connect, through a radio air interface, to the access gateway deployed by an operator, and then connect to another network device (for example, the telecommunications server or a server managed by the operator). The access gateway is mainly configured to implement a radio physical layer function, a resource scheduling and radio resource management function, a radio access control function, a mobility management function, and the like; and establish a channel with the terminal device, and forward a data packet between the terminal device and an external network device through the channel. The server shown in FIG. 2 may be a server managed by the operator, and may be referred to as a local server. The server may include a plurality of local service entities. Each local service entity can store content to be accessed by the terminal device, and provide a service for the terminal device. As shown in FIG. 2, the server may be connected to the access gateway by using a load balancing server (may be referred to as a local load balancing server), where the load balancing server is mainly configured to perform load balancing for a plurality of local service entities in the server. The telecommunications server may be managed by a content service provider, and mainly provides a content service for the terminal device. Usually, the telecommunications server is relatively far away from the terminal device. The access gateway, the server, and the load balancing server in FIG. 2 may be managed by the operator. Compared with the telecommunications server, the access gateway, the server, and the load balancing server are closer to the terminal device. The CDN server may be managed by a CND service provider, and mainly provides a content delivery service for the terminal device. The content service provider may sign a cooperation agreement with the CDN service provider, to determine, through negotiation, content that needs to be delivered in an accelerated manner, and the CDN server provides a delivery service specific to the content. The DNS mainly resolves a domain name submitted by a network device (such as a terminal device), to determine an Internet Protocol (internet protocol, IP) address corresponding to the domain name.

It should be noted that FIG. 2 is merely an example architectural diagram. In addition to the functional units shown in FIG. 2, the network architecture may further include another functional unit. This is not limited in this embodiment of this application. For example, there may be a plurality of other relay devices on a traffic path between the terminal device and the access network. The terminal device may send, to the access gateway by using the relay devices, information sent by the terminal device. Alternatively, as shown in FIG. 2, the terminal device establishes a radio link with the access gateway, and sends information to the access gateway through the radio link.

In an embodiment of this application, the content service provider may sign a cooperation agreement with the CDN service provider, to determine, through negotiation, which content provided by the telecommunications server in FIG. 2 is to be delivered by the CDN server in FIG. 2 in an accelerated manner (for ease of description, in this application, the content to be delivered by the CDN in an accelerated manner is referred to as "accelerated content"). The CDN service provider signs a cooperation agreement with an operator, to determine to use a local acceleration network facility within the operator (for example, a network facility including a server and a load balancing server), to implement delivery of accelerated content. The CDN server in FIG. 2 obtains the accelerated content provided by the content service provider in FIG. 2, or the accelerated content and requirement information corresponding to the accelerated content (for example, an acceleration range and acceleration degree of the accelerated content), and pushes the accelerated content to the operator. The operator pre-stores the accelerated content on a server with reference to a resource occupancy status of current infrastructure and/or the requirement information of the accelerated content, configures a unique identifier in an entire network for the accelerated content (for example, a content acceleration network service address (content acceleration service address, CASA)), configures a correspondence between the identifier and a traffic diversion policy in the access gateway, and feeds back the identifier to the CDN server. The traffic diversion policy is used to trigger the access gateway to divert an access request of the terminal device to a server that stores the content to be accessed by the terminal device, and the server provides the corresponding content for the terminal device. The CDN server stores the correspondence between the identifier and the accelerated content, where the accelerated content identification information is used to identify the accelerated content. When determining to access content by using the CDN server, the terminal device sends, to the CDN server, content identification information (for example, a domain name or a file name) for identifying the content. The CDN server determines, based on the content identification information, an identifier corresponding to the content identified by the content identification information, and returns the identifier to the terminal device. The terminal device sends an access request that carries the identifier. After the access gateway receives the access request, when a traffic diversion policy corresponding to the identifier is stored in the access gateway, the access gateway is triggered to perform a process of diverting the access request to the server, and the server provides the content for the terminal device based on the access request.

Specifically, the terminal device in FIG. 2 may be user equipment (user equipment, UE), for example, a mobile phone or a computer, or may be a cellular phone, a cordless phone, a Session Initiation Protocol (session initiation protocol, SIP) phone, a smartphone, a wireless local loop (wireless local loop, WLL) station, a personal digital assistant (personal digital assistant, PDA), a computer, a laptop computer, a handheld communications device, a handheld computing device, a satellite wireless device, a wireless modem card, a set top box (set top box, STB), customer premise equipment (customer premise equipment, CPE), and/or another device configured for communication in a wireless system.

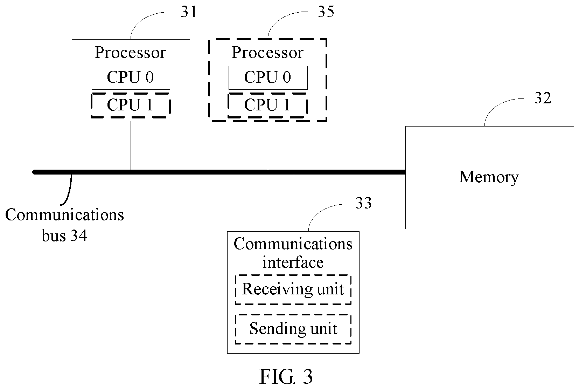

The access gateway in FIG. 2 may be a NodeB (NodeB, NB), an evolved NodeB (evolution NodeB, eNB), an access network (access network, AN)/radio access network (radio access network, RAN) device, and a network including a plurality of 5G-AN/5G-RAN nodes. The 5G-AN/5G-RAN node may be an access point (access point, AP), a next generation NodeB (NR NodeB), a transmission/reception point (transmission receive point, TRP), a transmission point (transmission point, TP), or another access node. As shown in FIG. 3, the access gateway in FIG. 2 may include but is not limited to the following components: at least one processor 31, a memory 32, a communications interface 33, and a communications bus 34. It should be noted that a structure of the device shown in FIG. 3 does not constitute a limitation on the access gateway. The access gateway may include components more or fewer than those shown in the figure, or a combination of some components, or components disposed differently. This is not limited in this embodiment of the present invention. The following specifically describes each constituent part of a management unit with reference to FIG. 3.

The processor 31 is a control center of the access gateway, and may be a processor, or may be a general term of a plurality of processing elements. For example, the processor 31 is a central processing unit (central processing unit, CPU), may be an application-specific integrated circuit (application specific integrated circuit, ASIC), or may be configured as one or more integrated circuits for implementing this application, for example, one or more microprocessors (digital signal processor, DSP), or one or more field programmable gate arrays (field programmable gate array, FPGA). The processor 31 may perform various functions of the access gateway by running or executing a software program stored in the memory 32 and calling data stored in the memory 32.

During specific implementation, in an embodiment, the processor 31 may include one or more CPUs, for example, a CPU 0 and a CPU 1 shown in FIG. 3. During specific implementation, in an embodiment, the access gateway may include a plurality of processors, for example, the processor 31 and a processor 35 shown in FIG. 3. Each of the processors may be a single-core processor (single-CPU), or may be a multi-core processor (multi-CPU). The processor herein may be one or more devices, circuits, and/or processing cores for processing data (for example, a computer program instruction).

The memory 32 may be a read-only memory (read-only memory, ROM), another type of static storage device that can store static information and an instruction, a random access memory (random access memory, RAM), or another type of dynamic storage device that can store information and an instruction; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a Blu-ray optical disc, or the like), a magnetic disk storage medium or another magnetic storage device, or any other medium that can be configured to carry or store expected program code in a form of an instruction or a data structure and that can be accessed by a computer. This does not constitute a limitation herein. The memory 32 may exist independently, and is connected to the processor 31 by using the communications bus 34. The memory 32 may alternatively be integrated with the processor 31. The memory 32 is configured to store and execute the software program for executing a solution of this application, and the processor 31 controls execution of the software program.

The communications interface 33 is configured to communicate with another device or a communications network, such as an Ethernet, a radio access network (radio access network, RAN), or a wireless local area network (wireless local area networks, WLAN). The communications interface 33 may include a receiving unit for implementing a receiving function and a sending unit for implementing a sending function.

The communications bus 34 may be an industry standard architecture (industry standard architecture, ISA) bus, a peripheral component interconnect (peripheral component, PCI) bus, an extended industry standard architecture (extended industry standard architecture, EISA) bus, or the like. The bus may be classified into an address bus, a data bus, a control bus, and the like. For ease of representation, the bus is represented by using only one thick line in FIG. 3, but this does not mean that there is only one bus or only one type of bus.

In an embodiment of this application, the communications interface 33 of the access gateway receives a configuration command, and the processor 31 of the access gateway configures, according to the configuration command, a correspondence between an identifier and a traffic diversion policy in the memory 32 of the access gateway. The communications interface 33 of the access gateway is further configured to obtain a first access request that carries a first identifier, where the first access request is used to request content to be accessed by the terminal device. The first identifier carried by the first access request corresponds to the content to be accessed by the terminal device. The processor 31 of the access gateway is configured to receive the first identifier on the communications interface 33, and determine a traffic diversion policy corresponding to the first identifier based on the correspondence in the memory 22. The processor 31 is triggered to divert, by using the communications interface 33, the received first access request to a first server that stores the content to be accessed by the terminal device. The communications interface 33 is further configured to receive the content returned by the first server, and send the content to the terminal device.

In another embodiment of this application, the memory 32 is configured to store a computer program instruction and data. The processor 31 calls the computer program instruction and the data, to perform a related function and trigger the communications interface 33 to perform a related function. Details are not described herein again.

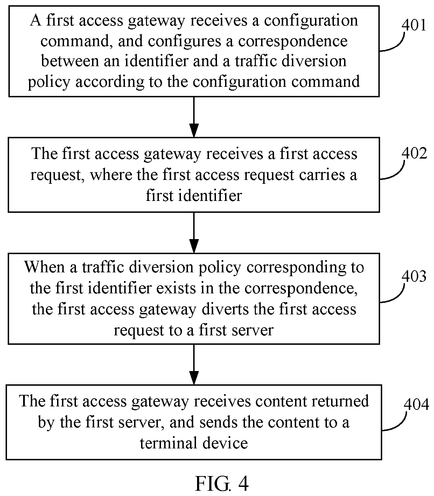

The foregoing embodiment merely generally describes functions of the processor 31, the memory 32, and the communications interface 33. For specific operation processes and functions of the processor 31, the memory 32, and the communications interface 33, refer to related description of the method embodiments corresponding to FIG. 4, FIG. 5, FIG. 6A, and FIG. 6B below. For example, in the following description of the method embodiments, all processing processes of the access gateway are performed by the processor 31, all storage processes of the access gateway are performed by the memory 32, and all receiving and sending processes of the access gateway are performed by the communications interface 33.

In another embodiment of this application, a computer storage medium is provided, where the computer storage medium is configured to store a computer software instruction used by the foregoing access gateway. The computer software instruction includes a program used to perform the foregoing solution.

With reference to the system architecture shown in FIG. 2, the following describes in detail the content delivery method provided in this application. A first access gateway in the following method embodiments may include the components shown in FIG. 3.

FIG. 4 is a flowchart of a content delivery method according to this application. As shown in FIG 4, the content delivery method includes the following steps.

Step 401. A first access gateway receives a configuration command, and configures a correspondence between an identifier and a traffic diversion policy according to the configuration command.

The first access gateway may be any access gateway in FIG. 2, and is a device through which a terminal device needs to pass when requesting content from an external network device (for example, a content server). The first access gateway may be connected to the terminal device by using one or more relay devices (for example, a router or another access gateway), or may be directly connected to the terminal device through a radio link.

The identifier may be named CASA, and may be in an IP address form, or may be in a non-IP address form, such as a digit, a character string, a letter, or another symbol. For example, the identifier may be 101.110.2.0, may be a digit 1, or may be a character string neirong. This is not limited.

In an embodiment of this application, the identifier corresponds to accelerated content, where the accelerated content is content that is in content provided by a content server and that needs to be delivered by a CDN server in an accelerated manner. The accelerated content is determined by a content service provider and a CDN service provider through negotiation. The identifier is unique in an entire network, assigned by an operator, and fed back to the CDN server by the operator, so that the CDN server stores a correspondence between the identifier and the accelerated content.

One piece of accelerated content may correspond to one or more different identifiers, and different accelerated content may correspond to a same identifier or different identifiers. This is not limited. It should be noted that, when same accelerated content corresponds to a plurality of identifiers, different identifiers may correspond to different service requirement information (such as bandwidth and a delay) or service levels, so that identifiers corresponding to content requested by different terminal devices are differentiated based on the service requirement information or the service levels.

For example, identifiers corresponding to accelerated content 1 are an identifier 1, an identifier 2, and an identifier 3. The identifier 1 corresponds to highest bandwidth, the identifier 2 corresponds to second highest bandwidth, and the identifier 3 corresponds to lowest bandwidth. If a terminal device 1 has relatively low credibility, and has a low requirement for service quality, an identifier corresponding to the content 1 requested by the terminal device 1 may be the identifier 3; if a terminal device 2 has relatively high credibility, and has a high requirement for service quality, an identifier corresponding to the content 1 requested by the terminal device 2 may be the identifier 1.

The traffic diversion policy is used to divert, to a server that stores content to be accessed by the terminal device, an access request that is sent by the terminal device for requesting content, and the server provides the corresponding content for the terminal device.

After determining an identifier corresponding to accelerated content, the operator may send, to the first access gateway, a configuration command that carries a correspondence between an identifier and a traffic diversion policy. The first access gateway configures the correspondence between an identifier and a traffic diversion policy in the first access gateway according to the configuration command. The operator may be China Telecom, China Mobile, China Unicom, National Radio and Television Network, and the like. This is not limited.

Step 402. The first access gateway receives a first access request, where the first access request carries a first identifier.

The first access request is sent by the terminal device, and the first access request is used to request the content to be accessed by the terminal device. The content to be accessed by the terminal device may be included in the accelerated content, and the first identifier corresponds to the content to be accessed by the terminal device.

The first identifier may be fed back to the terminal device by the CDN server. The CDN server may be the CDN server in FIG. 2. For example, when the terminal device determines that the CDN server provides the content for the terminal device, the terminal device sends, to the CDN server, a content request that carries content identification information. The CDN server determines, based on the content identification information and a correspondence between accelerated content and an identifier, the first identifier corresponding to the content identified by the content identification information, and returns the first identifier to the terminal device. The content identification information may be used to identify the content that the terminal device requests to access. For example, the content identification information may be a domain name, a file name, or a hash (Hash) value that corresponds to the content that the terminal device requests to access.

That the first access gateway receives a first access request may include:
the first access gateway receives the first access request sent by the terminal device through a first traffic path.

The first traffic path may be a radio link established between the terminal device and the first access gateway. Alternatively, there are one or more relay devices on the first traffic path, that is, when the first access gateway is one to m hops away from the terminal device, the terminal device may send the first access request to the relay device first, and then the relay device forwards the first access request to the first access gateway. The relay device may be a device such as another first access gateway or a router. This is not limited.

Step 403. When a traffic diversion policy corresponding to the first identifier exists in the correspondence, the first access gateway diverts the first access request to a first server.

In a possible design, the traffic diversion policy may include network address information of the server. The first access gateway obtains first network address information corresponding to the first identifier, and diverts the first access request to the first server based on the obtained first network address information. The first network address information is used to identify the first server.

The network address information may be used to identify the server that stores the content to be accessed by the terminal device. The network address information may be an IP address, or may be a MAC address. This is not limited. Generally, the server identified by the network address information is an optimal server of servers that store the content to be accessed by the terminal device. In the embodiments of this application, the optimal server may be a server that is in servers that store the content to be accessed by the terminal device and that is closest to the terminal device, or a server that can meet a quality of service requirement for the terminal device.

For example, as listed in the following Table 1, network address information corresponding to an identifier 1 in the traffic diversion policy is an IP address 1, and network address information corresponding to an identifier 2 is an IP address 2. When the first access gateway receives an access request that carries the identifier 1, as listed in Table 1, the network address information corresponding to the identifier 1 is the IP address 1. In this case, the first access gateway is triggered to divert the access request to a server identified by the IP address 1.

**Table 1**

| Identifier | Network address information |
|---|---|
| 1 | IP address 1 |
| 2 | IP address 2 |

That the first access gateway diverts the access request to the first server may include:
the first access gateway directly diverts the access request to the first server in any one of the following diversion modes: policy-based routing (for example, I-BGP and flow classification + label routing), a service link, an access control list (access control list, ACL), tunneling, and network address translation (network address translation, NAT); or
the first access gateway first diverts the access request to a load balancing server to which the first server belongs, and the load balancing server sends the access request to the first server.

In addition, the first access gateway may alternatively divert, in any one of the following diversion modes: policy-based routing, a service link, ACL, tunneling, and NAT, the access request to the load balancing server to which the first server belongs.

The diverting manners may be pre-configured in a traffic diversion policy. For example, as listed in Table 2, the traffic diversion policy includes an IP address and a diversion mode. When an identifier received by the first access gateway is 1, as listed in Table 2, an IP address corresponding to the identifier is an IP address 1, and a diversion mode is policy-based routing. In this case, it is determined that the access request is diverted, through policy-based routing, to a server identified by the IP address 1.

**Table 2**

| Identifier | IP address | Diversion mode |
|---|---|---|
| 1 | IP address 1 | Policy-based routing |
| 2 | IP address 2 | Service link |

Step 404. The first access gateway receives content returned by the first server, and sends the content to the terminal device.

The first access gateway may send the content to the terminal device through a second traffic path. The second traffic path and the first traffic path are the same or different. This is not limited.

Compared with an existing Http redirection technology, in the solution shown in FIG. 4, the access gateway configures the correspondence between an identifier and a traffic diversion policy. When the terminal device requests to access content corresponding to an identifier, the access request is intercepted by the first access gateway, and is directly diverted to the first server. The first server provides a content service for the terminal device, and the terminal device does not need to specify a DNS on its own, avoiding a traffic chaos problem. In addition, in the solution shown in FIG. 4, redirection instructions of a plurality of other network devices are not needed to divert the access request to a server, that is, there is no bypass, avoiding a problem of a relatively long scheduling delay. Moreover, in the solution shown in FIG. 4, the access gateway directly diverts the access request to the server with no need to point to a specific server with reference to positioning information of the terminal device. This avoids a prior-art problem that an Http server points to an inaccurate server based on positioning information of a terminal device due to low accuracy of positioning the terminal device.

It should be noted that, in the solution shown in FIG. 4, when the traffic diversion policy corresponding to the first identifier does not exist in the correspondence stored in the first access gateway, the first access gateway may forward the access request to the CDN server, and the CDN server provides corresponding content for the terminal device. Alternatively, the first access gateway returns a notification message to the terminal device. The terminal device sends the access request to the CDN server based on the notification message and obtains corresponding content.

In actual application, the network address information may be dynamically updated based on an actual status of a current network, to divert the access request to a relatively appropriate server. Specifically, the first access gateway may update the first network address information to second network address information based on position information of the terminal device, position information of the server that stores the content to be accessed by the terminal device, and a current network environment (a case such as network load and network bandwidth); or
the first access gateway receives an update command, and updates the first network address information to second network address information according to the update command, where the server identified by the first network address information is different from a server identified by the second network address information.

In this way, the network address information corresponding to the identifier may be dynamically updated based on an actual case such as the position information of the terminal device, the position information of the server, and the current network environment.

For example, at a time point t1, an identifier 1 corresponds to network address information 1 for identifying a server 1. After the time point t1, if it is discovered, based on the actual case such as the position information of the terminal device, the position information of the server, and the current network environment, that a server 2 is more appropriate to provide a content service for the terminal device, the network address information 1 corresponding to the identifier 1 is updated to network address information 2. The network address information 2 identifies the server 2.

Optionally, the solution shown in FIG. 4 further includes:
receiving, by the first access gateway, a second access request that carries a second identifier; and when a traffic diversion policy corresponding to the second identifier exists in the correspondence, configured by the first access gateway, between an identifier and a traffic diversion policy, diverting, by the first access gateway, the second access request to a second server, where the second server is different from the first server.

In this way, a same access gateway can divert access requests that carry different identifiers to different servers, and the different servers provide a content service for the terminal device, so as to implement load sharing.

Optionally, the solution shown in FIG. 4 further includes:
receiving, by a second access gateway, a first access request that carries the first identifier; and
when the traffic diversion policy corresponding to the first identifier exists in a correspondence, configured by the second access gateway, between an identifier and a traffic diversion policy, diverting, by the second access gateway, the first access request to a third server, where the third server is different from the first server.

In this way, an access request of a same terminal device may be diverted to different servers by different access gateways, so that the different servers provide a content service for the same terminal device, so as to implement load sharing.

Optionally, before step 402, the method further includes:
configuring, by a CDN server, a correspondence between the identifier and the accelerated content;
sending, by the terminal device, a content request to the CDN server, where the content request carries content identification information for identifying the content;
querying, by the CDN server, the correspondence between the identifier and the accelerated content, to determine the first identifier corresponding to the content to be accessed by the terminal device, and sending the first identifier to the terminal device; and
receiving, by the terminal device, the first identifier, and sending the access request that carries the first identifier.

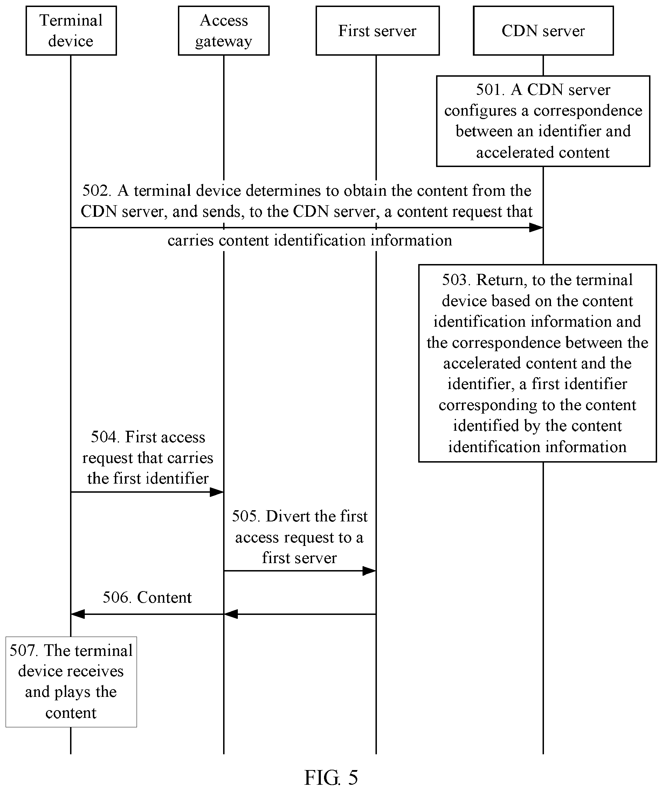

The CDN server may receive the identifier that corresponds to the accelerated content and that is fed back by the operator, and configure the correspondence between the identifier and the accelerated content on the CDN server; or the CDN server directly receives the correspondence between the identifier fed back by the operator and the accelerated content, and configures the correspondence on the CDN server; or the CDN server receives information that corresponds to the identifier of the accelerated content and that is fed back by the operator, calculates the information by using a Hash algorithm and the like, to obtain the identifier, and configures the correspondence between the identifier and the accelerated content on the CDN server. Specifically, for the foregoing optional steps, refer to a solution shown in FIG. 5. Details are not described herein.

FIG. 5 is a flowchart of a content delivery method according to this application. As shown in FIG 5, the content delivery method includes the following steps.

A content service provider and a CDN service provider determine accelerated content through negotiation. A CDN server obtains the accelerated content from a content server, and pushes the accelerated content to an operator. The operator determines to deliver the accelerated content by using a server (for example, a first server), assigns an identifier for the accelerated content, and returns the identifier to the CDN server.

The content service provider may determine, based on an access degree of content accessed by a user, content that is frequently accessed and has a large access amount as accelerated content. The operator may determine a server to deliver the accelerated content based on a network status of local network infrastructure (for example, load, bandwidth, a delay, and an occupancy status). For related description of the identifier, refer to the solution shown in FIG. 4. Details are not described herein again.

Step 501. The CDN server configures a correspondence between an identifier and accelerated content.

Step 502. A terminal device determines to obtain the content from the CDN server, and sends, to the CDN server, a content request that carries content identification information.

The content identification information is used to identify the content requested by the terminal device. For related description of the content identification information, refer to the solution shown in FIG. 4. Details are not described herein again.

The terminal device may attempt to connect each candidate that stores the content (for example, a server that stores the content to be accessed by the terminal device such as a CDN server, and a content server), and test a delay, a maximum throughput, jitter, and the like, to select an optimal CDN server to request the content.

Step 503. The CDN server returns, to the terminal device based on the content identification information and the correspondence between the accelerated content and the identifier, a first identifier corresponding to the content identified by the content identification information. When the content identification information is a domain name, the CDN server may include a DNS. The DNS resolves the domain name, determines the content corresponding to the content identification information, and searches the correspondence between the accelerated content and the identifier, for the identifier corresponding to the determined content.

Alternatively, when the content identification information is a domain name, the CDN server may include an Http service apparatus. The Http service apparatus returns a redirection instruction to the terminal device based on the content identification information. The redirection instruction includes the first identifier.

Step 504. The terminal device sends a first access request that carries the first identifier.

For related description of the first access request, refer to the solution shown in FIG. 4. Details are not described herein again.

The terminal device may send, through a first traffic path, the first access request that carries the first identifier. For related description of the first traffic path, refer to the solution shown in FIG. 4. Details are not described herein again.

Step 505. An access gateway receives the first access request that carries the first identifier, and when a traffic diversion policy corresponding to the first identifier exists in a correspondence, diverts the first access request to a first server.

For an implementation process of step 505, refer to step 403. Details are not described herein again.

Step 506. The access gateway receives content returned by the first server, and sends the content to the terminal device.

The access gateway may send the content to the terminal device through a second traffic path. For related description of the second traffic path, refer to the solution shown in FIG. 4. Details are not described herein again.

Step 507. The terminal device receives and plays the content.

The following describes in detail the foregoing solution by using the following example: A terminal device is UE that uses a network service provided by China Telecom, and the UE requests video content index information of Big Movie from a content server iQiyi, and obtains a content segment from a CDN server (for example, a CDN server provided by Wangsu Science & Technology Co., Ltd).

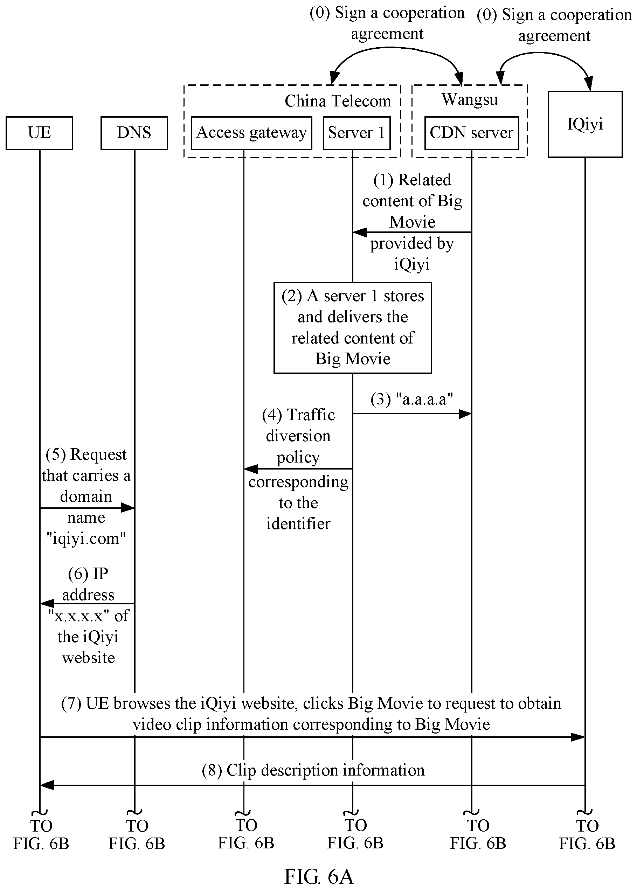

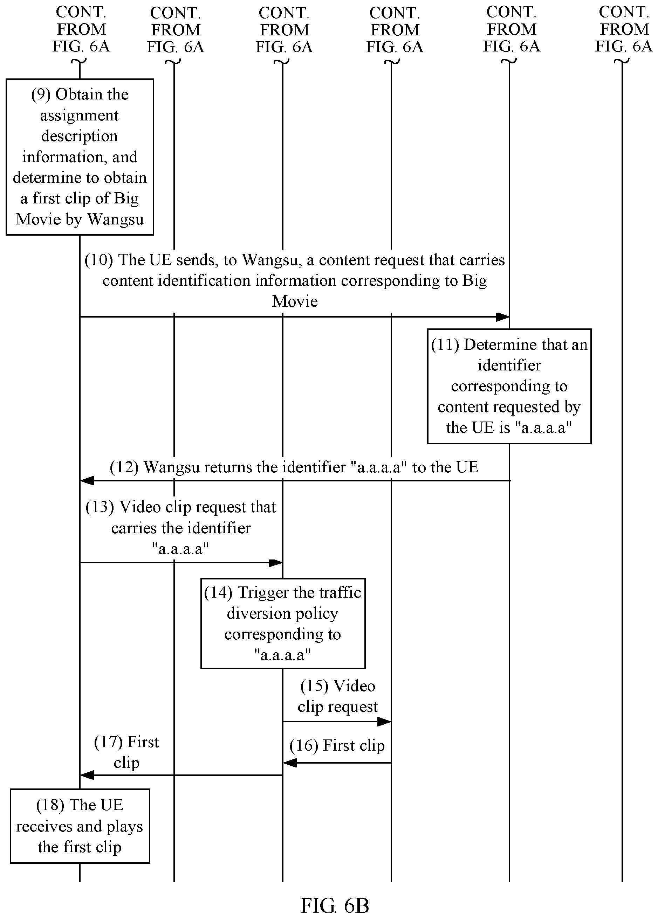

FIG. 6A and FIG. 6B are a flowchart of another content delivery method according to this application. As shown in FIG. 6A and FIG. 6B, the content delivery method includes the following steps.
(0) IQiyi signs a cooperation agreement with Wangsu, where Wangsu accelerates content delivery of iQiyi; and Wangsu signs a cooperation agreement with China Telecom, where a local acceleration network facility in the China Telecom network actually provides an acceleration service of content delivery.
(1) Wangsu pushes, to China Telecom based on the agreement with iQiyi, related content of Big Movie provided by iQiyi, and explains a delivery requirement corresponding to the content (such as an acceleration range and an acceleration degree).
(2) China Telecom receives the content of Big Movie, and determines, based on the delivery requirement and with reference to a case such as a resource occupancy status of current infrastructure, to use a server 1 to store and deliver the related content of Big Movie.
(3) China Telecom assigns an identifier for Big Movie, where the identifier is "a.a.a.a", and China Telecom feeds back "a.a.a.a" to Wangsu; and Wangsu stores a correspondence between "a.a.a.a" and Big Movie.
(4) China Telecom configures, on an access gateway managed by China Telecom, a traffic diversion policy corresponding to the CASA.

The traffic diversion policy corresponding to the CASA is used to divert an access request for accessing Big Movie to the server 1.
(5) UE browses the iQiyi website, and sends a request that carries a domain name "iqiyi.com".
(6) The UE obtains an IP address "x.x.x.x" of the iQiyi website through DNS resolution.
(7) The UE browses the iQiyi website based on the IP address "x.x.x.x" of the iQiyi website, and clicks Big Movie to request to obtain video clip information corresponding to Big Movie.
(8) IQiyi feeds back clip description information (Media Partition Description, MPD) to the UE.
(9) The UE obtains the assignment description information, and determines to obtain a first clip of Big Movie by Wangsu.
(10) The UE sends, to Wangsu, a content request that carries content identification information corresponding to Big Movie.
(11) A DNS of Wangsu determines that the UE is a China Telecom user and that an acceleration service of China Telecom has been purchased for the requested Big Movie; and determines, based on the correspondence between the stored "a.a.a.a" and Big Movie, that the identifier corresponding to the content requested by the UE is "a.a.a.a".
(12) Wangsu returns the identifier "a.a.a.a" to the UE.
(13) The UE sends a video clip request that carries the identifier "a.a.a.a".
(14) The access gateway receives the video clip request that carries the identifier "a.a.a.a", and triggers the traffic diversion policy corresponding to "a.a.a.a".
(15) The access gateway diverts the video clip request to the server 1.
(16) The server 1 receives the video clip request, and returns the first clip to the access gateway.
(17) The access gateway receives the first clip, and sends the first clip to the UE.
(18) The UE receives and plays the first clip.

It should be noted that the foregoing merely describes a process of obtaining the first clip, and for another clip, refer to the foregoing implementation process. For example, when the UE plays the first clip, content of a second clip may be requested synchronously according to step (13) to step (18).

The foregoing mainly describes, from a perspective of interaction between various nodes, the solutions provided in this application. It can be understood that, to implement the foregoing functions, the nodes, such as the access gateway, include corresponding hardware structures and/or software modules for performing the functions. A person skilled in the art should be easily aware that, units and algorithm steps of each example described with reference to the embodiments disclosed in the specification may be implemented by hardware or a combination of hardware and computer software in the present invention. Whether a function is performed by hardware or computer software driving hardware depends on particular applications and design constraints of the technical solutions. A person skilled in the art may use different methods to implement the described functions for each particular application, but it should not be considered that the implementation goes beyond the scope of the present invention.

In this application, the access gateway may be divided into function modules according to the foregoing method example. For example, the function modules corresponding to various functions may be obtained through division, or two or more functions are integrated into one processing module. The integrated module may be implemented in a form of hardware, or may be implemented in a form of a software function module. It should be noted that, division of modules in this application is merely an example, and is merely logical function division, and may be other division in actual implementation.

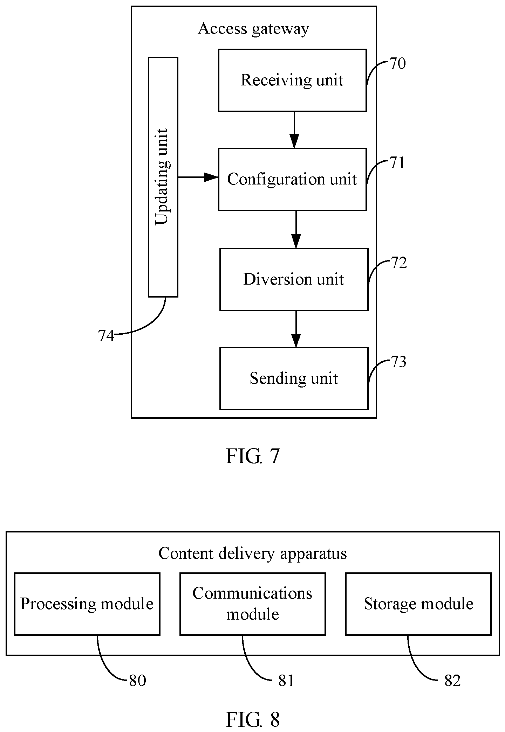

When various function modules are obtained through division according to corresponding functions, FIG. 7 is a possible schematic composition diagram of an access gateway. The access gateway may be configured to perform functions of the access gateway related to the foregoing embodiments. As shown in FIG. 7, the access gateway may include a receiving unit 70, a configuration unit 71, a diversion unit 72, a sending unit 73, and an updating unit 74.

The receiving unit 70 is configured to receive a configuration command, receive a first access request that carries a first identifier, receive content returned by a server, and the like. For example, the receiving unit 70 is configured to support the access gateway in performing step 401, step 402, step 404, and the like.

The configuration unit 71 is configured to configure a correspondence between an identifier and a traffic diversion policy according to the configuration command. For example, the configuration unit 71 is configured to support the access gateway in performing step 401 and the like.

The diversion unit 72 is configured to: when a traffic diversion policy corresponding to the identifier exists in the correspondence, divert the access request to a server. For example, the diversion unit 72 is configured to support the access gateway in performing step 403 and the like. The sending unit 73 is configured to send content to a terminal device. For example, the sending unit 73 is configured to support the access gateway in performing step 404 and the like.

The updating unit 74 is configured to update the first network address information to second network address information based on position information of the terminal device, position information of the server that stores the content to be accessed by the terminal device, and a current network environment; or update the first network address information to second network address information according to the update command.

It should be noted that all related content of all steps related to the foregoing method embodiment may be cited in function descriptions of corresponding function modules. Details are not described herein again. The access gateway provided in this embodiment of the present invention is configured to perform the foregoing content delivery method, and therefore, can achieve a same effect as the foregoing content delivery method.

When an integrated unit is used, FIG. 8 shows a content delivery apparatus. The content delivery apparatus is in a form of a chip product, configured to perform a function of the first access gateway in the foregoing embodiment. As shown in FIG. 8, the content delivery apparatus may include a processing module 80 and a communications module 81.

The processing module 80 is configured to control and manage an action of the content delivery apparatus. For example, the processing module 80 is configured to support the content delivery apparatus in performing the processes performed by the configuration unit 71, the diversion unit 72, and the updating unit 74 and/or another process used for a technology described in this specification. The communications module 81 is configured to support the content delivery apparatus in communicating with another network entity. The content delivery apparatus may further include a storage module 82, configured to store program code and data of the content delivery apparatus.

The processing module 80 may be a processor or a controller. The processor/controller may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor. The communications module 81 may be a communications interface, a transceiver circuit, a communications interface, or the like. The storage module 82 may be a memory.

When the processing module 80 is a processor, the communications module 81 is a communications interface, and the storage module 82 is a memory, the content delivery apparatus in this embodiment of the present invention may be the access gateway shown in FIG. 3.

The foregoing descriptions about implementations allow a person skilled in the art to understand that, for the purpose of convenient and brief description, division of the foregoing function modules is used as an example for illustration. In actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of the present invention. The foregoing storage medium includes: any medium that can store program code, such as a USB, a removable hard disk, a ROM, a RAM, a magnetic disk, or an optical disc.

The foregoing descriptions are merely specific implementations of the present invention, but are not intended to limit the protection scope of the present invention. Any variation or replacement within the technical scope disclosed in the present invention shall fall within the protection scope of the present invention. Therefore, the protection scope of the present invention shall be subject to the protection scope of the appended claims.

## Claims

1. A content delivery method, comprising:
receiving (401), by a first access gateway, a configuration command, sent by an operator and configuring by the first access gateway a correspondence between an identifier assigned by the operator
and a traffic diversion policy according to the configuration command, wherein the identifier corresponds to accelerated content;
receiving (402), by the first access gateway, a first access request, originated by a terminal device, wherein the first access request carries a first identifier, and the first access request is used to request content to be accessed by the terminal device;
when a traffic diversion policy corresponding to the first identifier exists in the correspondence, diverting (403), by the first access gateway, the first access request to a first server; and
receiving (404), by the first access gateway, content returned by the first server, and sending the content to the terminal device, wherein the method further comprises before the step of receiving (402):
configuring (501) by a CDN server, a correspondence between the identifier and the accelerated content;
sending (502), by the terminal device, a content request to the CDN server, wherein the content request carries content identification information for identifying the content;
querying (503), by the CDN server, the correspondence between the identifier and the accelerated content, to determine the first identifier corresponding to the content, and sending the first identifier to the terminal device; and
receiving, by the terminal device, the first identifier, and sending (504) by the terminal device the first access request that carries the first identifier to the first access gateway.

2. The content delivery method according to claim 1, wherein the traffic diversion policy comprises network address information, and the network address information is used to identify a server that stores the content to be accessed by the terminal device, and the diverting, by the first access gateway, the first access request to a first server comprises:
obtaining, by the first access gateway, first network address information in the traffic diversion policy corresponding to the first identifier, wherein the first network address information is used to identify the first server; and
diverting the first access request to the first server based on the first network address information.

3. The content delivery method according to claim 2, wherein the method further comprises:
updating, by the first access gateway, the first network address information to second network address information based on position information of the terminal device, position information of the server that stores the content to be accessed by the terminal device, and a current network environment; or
receiving, by the first access gateway, an update command, and updating the first network address information to second network address information according to the update command, wherein
the server identified by the first network address information is different from a server identified by the second network address information.

4. The content delivery method according to claim 2 or 3, wherein
the network address information is an Internet Protocol IP address or a Media Access Control MAC address.

5. The content delivery method according to any one of claims 1 to 4, wherein the method further comprises:
receiving, by the first access gateway, a second access request that carries a second identifier; and
when a traffic diversion policy corresponding to the second identifier exists in the correspondence, configured by the first access gateway, between an identifier and a traffic diversion policy, diverting, by the first access gateway, the second access request to a second server, wherein the second server is different from the first server.

6. The content delivery method according to any one of claims 1 to 5, wherein the receiving, by the first access gateway, a first access request comprises:
receiving, by the first access gateway, the first access request sent by the terminal device through a first traffic path; and
the sending, by the first access gateway, the content to the terminal device comprises:
sending, by the first access gateway, the content to the terminal device through a second traffic path, wherein
there is at least one relay device on the first traffic path, and the second traffic path and the first traffic path are the same or different.

7. The content delivery method according to any one of claims 1 to 6, wherein
the identifier is an identifier in any one of the following forms: an IP address, a character string, a digit, and a letter.

8. The content delivery method according to any one of claims 1 to 7, wherein
one piece of accelerated content corresponds to one or more different identifiers; and identifiers corresponding to different accelerated content are the same or different.

9. The content delivery method according to any one of claims 1 to 8, wherein the method further comprises:
receiving, by a second access gateway, an access request that carries the first identifier; and
when the traffic diversion policy corresponding to the first identifier exists in a correspondence, configured by the second access gateway, between an identifier and a traffic diversion policy, diverting, by the second access gateway, the access request to a third server, wherein the third server is different from the first server.

10. A content delivery system comprising a CDN server, a terminal device, an operator, a first server and a first access gateway, the first access gateway, comprising:
a receiving unit, configured to receive a configuration command, sent by the operator;
a configuration unit, configured to configure a correspondence between an identifier assigned by the operator and a traffic diversion policy according to the configuration command, wherein the identifier corresponds to accelerated content, wherein
the receiving unit is further configured to receive a first access request originated by the terminal device, the first access request carries a first identifier, and the first access request is used to request content to be accessed by a terminal device;
a diversion unit, configured to: when a traffic diversion policy corresponding to the first identifier exists in the correspondence, divert the first access request to the first server, wherein
the receiving unit is further configured to receive content returned by the first server; and
a sending unit, configured to send the content to the terminal device, wherein before the receiving unit receives the first access request originated by the terminal device;
the CDN server is configured to configure a correspondence between the identifier and the accelerated content;
the terminal device is configured to send a content request to the CDN server, wherein the content request carries content identification information for identifying the content;
the CDN server is configured to query the correspondence between the identifier and the accelerated content, to determine the first identifier corresponding to the content, and is configured to send the first identifier to the terminal device; and
the terminal device is configured to receive the first identifier, and the terminal device is configured to send the first access request that carries the first identifier to the first access gateway.

11. The content delivery system according to claim 10, wherein the traffic diversion policy comprises network address information, and the network address information is used to identify a server that stores the content to be accessed by the terminal device; and
the diversion unit is specifically configured to obtain first network address information in the traffic diversion policy corresponding to the first identifier, and divert the first access request to the first server based on the first network address information, wherein the first network address information is used to identify the first server.

12. The content delivery system according to claim 11, wherein the access gateway comprises an updating unit, wherein
the updating unit is configured to update the first network address information to second network address information based on position information of the terminal device, position information of the server that stores the content to be accessed by the terminal device, and a current network environment; or
the receiving unit is further configured to receive an update command; and
the updating unit is configured to update the first network address information to second network address information according to the update command, wherein the server identified by the first network address information is different from a server identified by the second network address information.

## Patentansprüche

1. Inhaltsbereitstellungsverfahren, umfassend:
Empfangen (401), durch ein erstes Zugriffs-Gateway, eines durch einen Betreiber gesendeten Konfigurationsbefehls und Konfigurieren, durch das erste Zugriffs-Gateway, einer Entsprechung zwischen einer durch den Betreiber zugewiesenen Kennung und einer Verkehrsumleitungsrichtlinie gemäß dem Konfigurationsbefehl, wobei die Kennung beschleunigtem Inhalt entspricht;
Empfangen (402), durch das erste Zugriffs-Gateway, einer durch eine Endgerätvorrichtung hervorgebrachten ersten Zugriffsanforderung, wobei die erste Zugriffsanforderung eine erste Kennung führt und die erste Zugriffsanforderung verwendet wird, um Inhalt anzufordern, auf den durch die Endgerätvorrichtung zugegriffen werden soll;
wenn eine der ersten Kennung entsprechende Verkehrsumleitungsrichtlinie in der Entsprechung vorhanden ist, Umleiten (403), durch das erste Zugriffs-Gateway, der ersten Zugriffsanforderung an einen ersten Server; und
Empfangen (404), durch das erste Zugriffs-Gateway, von durch den ersten Server zurückgegebenem Inhalt, und Senden des Inhalts an die Endgerätvorrichtung, wobei das Verfahren ferner vor dem Schritt des Empfangens (402) umfasst:
Konfigurieren (501), durch einen CDN-Server, einer Entsprechung zwischen der Kennung und dem beschleunigten Inhalt;
Senden (502), durch die Endgerätvorrichtung, einer Inhaltsanforderung an den CDN-Server, wobei die Inhaltsanforderung eine Inhaltsidentifikationsinformation zum Identifizieren des Inhalts führt;
Abrufen (503), durch den CDN-Server, der Entsprechung zwischen der Kennung und dem beschleunigten Inhalt, um die dem Inhalt entsprechende erste Kennung zu bestimmen, und Senden der ersten Kennung an die Endgerätvorrichtung; und
Empfangen, durch die Endgerätvorrichtung, der ersten Kennung, und Senden (504), durch die Endgerätvorrichtung, der ersten Zugriffsanforderung, die die erste Kennung führt, an das erste Zugriffs-Gateway.

2. Inhaltsbereitstellungsverfahren nach Anspruch 1, wobei die Verkehrsumleitungsrichtlinie eine Netzwerkadressinformation umfasst, und die Netzwerkadressinformation verwendet wird, um einen Server zu identifizieren, der den Inhalt, auf den durch die Endgerätvorrichtung zugegriffen werden soll, speichert, und wobei das Umleiten, durch das erste Zugriffs-Gateway, der ersten Zugriffsanforderung an einen ersten Server umfasst: Erhalten, durch das erste Zugriffs-Gateway, einer ersten Netzwerkadressinformation in der Verkehrsumleitungsrichtlinie, die der ersten Kennung entspricht, wobei die erste Netzwerkadressinformation verwendet wird, um den ersten Server zu identifizieren; und Umleiten der ersten Zugriffsanforderung an den ersten Server basierend auf der ersten Netzwerkadressinformation.

3. Inhaltsbereitstellungsverfahren nach Anspruch 2, wobei das Verfahren ferner umfasst:
Aktualisieren, durch das erste Zugriffs-Gateway, der ersten Netzwerkadressinformation zu einer zweiten Netzwerkadressinformation basierend auf einer Standortinformation der Endgerätvorrichtung, einer Standortinformation des Servers, der den Inhalt, auf den durch die Endgerätvorrichtung zugegriffen werden soll, speichert, und einer aktuellen Netzwerkumgebung; oder
Empfangen, durch das erste Zugriffs-Gateway, eines Aktualisierungsbefehls, und Aktualisieren der ersten Netzwerkadressinformation zu einer zweiten Netzwerkadressinformation gemäß dem Aktualisierungsbefehl, wobei der durch die erste Netzwerkadressinformation identifizierte Server sich von einem durch die zweite Netzwerkadressinformation identifizierten Server unterscheidet.

4. Inhaltsbereitstellungsverfahren nach Anspruch 2 oder 3, wobei
die Netzwerkadressinformation eine Internetprotokoll-IP-Adresse oder eine Medienzugriffssteuerungs-MAC-Adresse ist.

5. Inhaltsbereitstellungsverfahren nach einem der Ansprüche 1 bis 4, wobei das Verfahren ferner umfasst:
Empfangen, durch das erste Zugriffs-Gateway, einer zweiten Zugriffsanforderung, die eine zweite Kennung führt; und
wenn eine der zweiten Kennung entsprechende Verkehrsumleitungsrichtlinie in der Entsprechung, die durch das erste Zugriffs-Gateway konfiguriert wird, zwischen einer Kennung und einer Verkehrsumleitungsrichtlinie vorhanden ist, Umleiten, durch das erste Zugriffs-Gateway, der zweiten Zugriffsanforderung an einen zweiten Server, wobei der zweite Server sich von dem ersten Server unterscheidet.

6. Inhaltsbereitstellungsverfahren nach einem der Ansprüche 1 bis 5, wobei das Empfangen, durch das erste Zugriffs-Gateway, einer ersten Zugriffsanforderung umfasst:
Empfangen, durch das erste Zugriffs-Gateway, der durch die Endgerätvorrichtung über einen ersten Verkehrsweg gesendeten ersten Zugriffsanforderung; und
wobei das Senden, durch das erste Zugriffs-Gateway, des Inhalts an die Endgerätvorrichtung umfasst:
Senden, durch das erste Zugriffs-Gateway, des Inhalts an die Endgerätvorrichtung über einen zweiten Verkehrsweg, wobei
mindestens eine Relaisvorrichtung an dem ersten Verkehrsweg vorhanden ist, und der zweite Verkehrsweg und der erste Verkehrsweg gleich oder unterschiedlich sind.

7. Inhaltsbereitstellungsverfahren nach einem der Ansprüche 1 bis 6, wobei die Kennung eine Kennung in einer beliebigen der folgenden Formen ist: eine IP-Adresse, eine Zeichenfolge, eine Ziffer und ein Buchstabe.

8. Inhaltsbereitstellungsverfahren nach einem der Ansprüche 1 bis 7, wobei ein Teil von beschleunigtem Inhalt einer oder mehreren unterschiedlichen Kennungen entspricht; und
Kennungen, die unterschiedlichem beschleunigtem Inhalt entsprechen, gleich oder unterschiedlich sind.

9. Inhaltsbereitstellungsverfahren nach einem der Ansprüche 1 bis 8, wobei das Verfahren ferner umfasst:
Empfangen, durch ein zweites Zugriffs-Gateway, einer Zugriffsanforderung, die die erste Kennung führt; und
wenn die der ersten Kennung entsprechende Verkehrsumleitungsrichtlinie in einer Entsprechung, die durch das zweite Zugriffs-Gateway konfiguriert wird, zwischen einer Kennung und einer Verkehrsumleitungsrichtlinie vorhanden ist, Umleiten, durch das zweite Zugriffs-Gateway, der Zugriffsanforderung an einen dritten Server, wobei der dritte Server sich von dem ersten Server unterscheidet.

10. Inhaltsbereitstellungssystem, das einen CDN-Server, eine Endgerätvorrichtung, einen Betreiber, einen ersten Server und ein erstes Zugriffs-Gateway umfasst,
wobei das erste Zugriffs-Gateway umfasst:
eine Empfangseinheit, die konfiguriert ist, einen durch den Betreiber gesendeten Konfigurationsbefehl zu empfangen;
eine Konfigurationseinheit, die konfiguriert ist, eine Entsprechung zwischen einer durch den Betreiber zugewiesenen Kennung und einer Verkehrsumleitungsrichtlinie gemäß dem Konfigurationsbefehl zu konfigurieren, wobei die Kennung beschleunigtem Inhalt entspricht, wobei
die Empfangseinheit ferner konfiguriert ist, eine durch die Endgerätvorrichtung hervorgebrachte erste Zugriffsanforderung zu empfangen, wobei die erste Zugriffsanforderung eine erste Kennung führt, und die erste Zugriffsanforderung verwendet wird, um Inhalt anzufordern, auf den durch eine Endgerätvorrichtung zugegriffen werden soll;
eine Umleitungseinheit, die zu Folgendem konfiguriert ist: wenn eine der ersten Kennung entsprechende Verkehrsumleitungsrichtlinie in der Entsprechung vorhanden ist, Umleiten der ersten Zugriffsanforderung an den ersten Server, wobei
die Empfangseinheit ferner konfiguriert ist, durch den ersten Server zurückgegebenen Inhalt zu empfangen; und
eine Sendeeinheit, die konfiguriert ist, den Inhalt an die Endgerätvorrichtung zu senden, wobei bevor die Empfangseinheit die durch die Endgerätvorrichtung hervorgebrachte erste Zugriffsanforderung empfängt;
der CDN-Server konfiguriert ist, eine Entsprechung zwischen der Kennung und dem beschleunigten Inhalt zu konfigurieren;
die Endgerätvorrichtung konfiguriert ist, eine Inhaltsanforderung an den CDN-Server zu senden, wobei die Inhaltsanforderung eine Inhaltsidentifikationsinformation zum Identifizieren des Inhalts führt;
der CDN-Server konfiguriert ist, die Entsprechung zwischen der Kennung und dem beschleunigten Inhalt abzurufen, um die dem Inhalt entsprechende erste Kennung zu bestimmen, und konfiguriert ist, die erste Kennung an die Endgerätvorrichtung zu senden; und
die Endgerätvorrichtung konfiguriert ist, die erste Kennung zu empfangen, und die Endgerätvorrichtung konfiguriert ist, die erste Zugriffsanforderung, die die erste Kennung führt, an das erste Zugriffs-Gateway zu senden.

11. Inhaltsbereitstellungssystem nach Anspruch 10, wobei die Verkehrsumleitungsrichtlinie eine Netzwerkadressinformation umfasst, und die Netzwerkadressinformation verwendet wird, um einen Server zu identifizieren, der den Inhalt, auf den durch die Endgerätvorrichtung zugegriffen werden soll, speichert; und
wobei die Umleitungseinheit insbesondere konfiguriert ist, eine erste Netzwerkadressinformation in der Verkehrsumleitungsrichtlinie, die der ersten Kennung entspricht, zu erhalten, und die erste Zugriffsanforderung an den ersten Server basierend auf der ersten Netzwerkadressinformation umzuleiten, wobei die erste Netzwerkadressinformation verwendet wird, um den ersten Server zu identifizieren.

12. Inhaltsbereitstellungssystem nach Anspruch 11, wobei das Zugriffs-Gateway eine Aktualisierungseinheit umfasst, wobei
die Aktualisierungseinheit konfiguriert ist, die erste Netzwerkadressinformation zu einer zweiten Netzwerkadressinformation basierend auf einer Standortinformation der Endgerätvorrichtung, einer Standortinformation des Servers, der den Inhalt, auf den durch die Endgerätvorrichtung zugegriffen werden soll, speichert, und einer aktuellen Netzwerkumgebung zu aktualisieren; oder
die Empfangseinheit ferner konfiguriert ist, einen Aktualisierungsbefehl zu empfangen; und
die Aktualisierungseinheit konfiguriert ist, die erste Netzwerkadressinformation zu einer zweiten Netzwerkadressinformation gemäß dem Aktualisierungsbefehl zu aktualisieren,
wobei der durch die erste Netzwerkadressinformation identifizierte Server sich von einem durch die zweite Netzwerkadressinformation identifizierten Server unterscheidet.

## Revendications

1. Procédé de distribution de contenu, comprenant :
la réception (401), par une première passerelle d'accès, d'une commande de configuration, envoyée par un opérateur et configurant par la première passerelle d'accès une correspondance entre un identifiant attribué par l'opérateur et une politique de détournement de trafic en fonction de la commande de configuration, l'identifiant correspondant à un contenu accéléré ;
la réception (402), par la première passerelle d'accès, d'une première demande d'accès, provenant d'un dispositif terminal, la première demande d'accès transportant un premier identifiant, et la première demande d'accès étant utilisée pour demander un contenu auquel le dispositif terminal doit accéder ;
lorsqu'une politique de détournement de trafic correspondant au premier identifiant existe dans la correspondance, le détournement (403), par la première passerelle d'accès, de la première demande d'accès vers un premier serveur ; et
la réception (404), par la première passerelle d'accès, d'un contenu renvoyé par le premier serveur, et l'envoi du contenu au dispositif terminal, le procédé comprenant en outre, avant l'étape de réception (402) :
la configuration (501), par un serveur CDN, d'une correspondance entre l'identifiant et le contenu accéléré ;
l'envoi (502), par le dispositif terminal, d'une demande de contenu au serveur CDN, la demande de contenu transportant des informations d'identification de contenu pour l'identification du contenu ;
l'interrogation (503), par le serveur CDN, de la correspondance entre l'identifiant et le contenu accéléré, pour déterminer le premier identifiant correspondant au contenu, et l'envoi du premier identifiant au dispositif terminal ; et
la réception, par le dispositif terminal, du premier identifiant, et l'envoi (504) par le dispositif terminal de la première demande d'accès qui transporte le premier identifiant à la première passerelle d'accès.

2. Procédé de distribution de contenu selon la revendication 1, la politique de détournement de trafic comprenant des informations d'adresse réseau, et les informations d'adresse réseau étant utilisées pour identifier un serveur qui stocke le contenu auquel le dispositif terminal doit accéder, et le détournement, par la première passerelle d'accès, de la première demande d'accès vers un premier serveur comprenant :
l'obtention, par la première passerelle d'accès, de premières informations d'adresse réseau dans la politique de détournement de trafic correspondant au premier identifiant, les premières informations d'adresse réseau étant utilisées pour identifier le premier serveur ; et
le détournement de la première demande d'accès vers le premier serveur sur la base des premières informations d'adresse réseau.

3. Procédé de distribution de contenu selon la revendication 2, le procédé comprenant en outre :
la mise à jour, par la première passerelle d'accès, des premières informations d'adresse réseau en secondes informations d'adresse réseau sur la base des informations de position du dispositif terminal, des informations de position du serveur qui stocke le contenu auquel le dispositif terminal doit accéder, et d'un environnement réseau actuel ; ou
la réception, par la première passerelle d'accès, d'une commande de mise à jour, et la mise à jour des premières informations d'adresse réseau en secondes informations d'adresse réseau selon la commande de mise à jour,
le serveur identifié par les premières informations d'adresse réseau étant différent d'un serveur identifié par les secondes informations d'adresse réseau.

4. Procédé de distribution de contenu selon la revendication 2 ou 3, les informations d'adresse réseau étant une adresse IP de protocole Internet ou une adresse de contrôle d'accès au support MAC.

5. Procédé de distribution de contenu selon l'une quelconque des revendications 1 à 4, le procédé comprenant en outre :
la réception, par la première passerelle d'accès, d'une seconde demande d'accès qui transporte un second identifiant ; et
lorsqu'une politique de détournement de trafic correspondant au second identifiant existe dans la correspondance, configurée par la première passerelle d'accès, entre un identifiant et une politique de détournement de trafic, le détournement, par la première passerelle d'accès, de la seconde demande d'accès vers un second serveur, le second serveur étant différent du premier serveur.

6. Procédé de distribution de contenu selon l'une quelconque des revendications 1 à 5, la réception, par la première passerelle d'accès, d'une première demande d'accès comprenant :
la réception, par la première passerelle d'accès, de la première demande d'accès envoyée par le dispositif terminal via un premier chemin de trafic ; et
l'envoi, par la première passerelle d'accès, du contenu au dispositif terminal comprenant : l'envoi, par la première passerelle d'accès, du contenu au dispositif terminal via un second chemin de trafic, au moins un dispositif relais étant sur le premier chemin de trafic, et le second chemin de trafic et le premier chemin de trafic étant identiques ou différents.

7. Procédé de distribution de contenu selon l'une quelconque des revendications 1 à 6, l'identifiant étant un identifiant sous l'une quelconque des formes suivantes : une adresse IP, une chaîne de caractères, un chiffre et une lettre.

8. Procédé de distribution de contenu selon l'une quelconque des revendications 1 à 7, un élément de contenu accéléré correspondant à un ou plusieurs identifiants différents ; et des identifiants correspondant à différents contenus accélérés étant identiques ou différents.

9. Procédé de distribution de contenu selon l'une quelconque des revendications 1 à 8, le procédé comprenant en outre :
la réception, par une seconde passerelle d'accès, d'une demande d'accès qui transporte le premier identifiant ; et
lorsque la politique de détournement de trafic correspondant au premier identifiant existe dans une correspondance, configurée par la seconde passerelle d'accès, entre un identifiant et une politique de détournement de trafic, le détournement, par la seconde passerelle d'accès, de la demande d'accès vers un troisième serveur, le troisième serveur étant différent du premier serveur.

10. Système de distribution de contenu comprenant un serveur CDN, un dispositif terminal, un opérateur, un premier serveur et une première passerelle d'accès, la première passerelle d'accès comprenant :
une unité de réception, configurée pour recevoir une commande de configuration, envoyée par l'opérateur ;
une unité de configuration, configurée pour configurer une correspondance entre un identifiant attribué par l'opérateur et une politique de détournement de trafic selon la commande de configuration, l'identifiant correspondant à un contenu accéléré,
l'unité de réception étant en outre configurée pour recevoir une première demande d'accès provenant du dispositif terminal, la première demande d'accès transportant un premier identifiant, et la première demande d'accès étant utilisée pour demander un contenu auquel un dispositif terminal doit accéder ;
une unité de détournement, configurée pour : lorsqu'une politique de détournement de trafic correspondant au premier identifiant existe dans la correspondance, détourner la première demande d'accès vers le premier serveur,
l'unité de réception étant en outre configurée pour recevoir le contenu renvoyé par le premier serveur ; et
une unité d'envoi, configurée pour envoyer le contenu au dispositif terminal, avant que l'unité de réception ne reçoive la première demande d'accès provenant du dispositif terminal ;
le serveur CDN étant configuré pour configurer une correspondance entre l'identifiant et le contenu accéléré ;
le dispositif terminal étant configuré pour envoyer une demande de contenu au serveur CDN, la demande de contenu transportant des informations d'identification de contenu pour l'identification du contenu ;
le serveur CDN étant configuré pour interroger la correspondance entre l'identifiant et le contenu accéléré, pour déterminer le premier identifiant correspondant au contenu, et étant configuré pour envoyer le premier identifiant au dispositif terminal ; et
le dispositif terminal étant configuré pour recevoir le premier identifiant, et le dispositif terminal étant configuré pour envoyer la première demande d'accès qui transporte le premier identifiant à la première passerelle d'accès.

11. Système de distribution de contenu selon la revendication 10, la politique de détournement de trafic comprenant des informations d'adresse réseau, et les informations d'adresse réseau étant utilisées pour identifier un serveur qui stocke le contenu auquel le dispositif terminal doit accéder ; et
l'unité de détournement étant spécifiquement configurée pour obtenir des premières informations d'adresse réseau dans la politique de détournement de trafic correspondant au premier identifiant, et détourner la première demande d'accès vers le premier serveur sur la base des premières informations d'adresse réseau, les premières informations d'adresse réseau étant utilisées pour identifier le premier serveur.

12. Système de distribution de contenu selon la revendication 11, la passerelle d'accès comprenant une unité de mise à jour,
l'unité de mise à jour étant configurée pour mettre à jour les premières informations d'adresse réseau en secondes informations d'adresse réseau sur la base des informations de position du dispositif terminal, des informations de position du serveur qui stocke le contenu auquel le dispositif terminal doit accéder, et d'un environnement réseau actuel ;
ou
l'unité de réception étant en outre configurée pour recevoir une commande de mise à jour ; et
l'unité de mise à jour étant configurée pour mettre à jour les premières informations d'adresse réseau en secondes informations d'adresse réseau en fonction de la commande de mise à jour, le serveur identifié par les premières informations d'adresse réseau étant différent d'un serveur identifié par les secondes informations d'adresse réseau.
